# FASCICULE DE BREVET EUROPEEN

(11) **EP 0 936 122 B1**
(45) Date de publication et mention de la délivrance du brevet: **20.04.2005**
(21) Numéro de dépôt: 99400316.8
(22) Date de dépôt: 10.02.1999
(51) Int. Cl.: B61D 33/00, B64D 11/06, B60N 2/06

(54) **Banquette deux places modulable première-seconde classe et procédé de transformation d'une telle banquette**
Zweisitzige, für die Nutzung in der ersten und zweiten Klasse umwandelbare Bank und Verfahren zur Umwandlung einer solchen Bank
Two-seat bench changeable for use in first and second classes and method of changing such a bench

(30) Priorité: 12.02.1998 FR 9801678
(43) Date de publication de la demande: 18.08.1999
(73) Titulaire: Alstom Transport S.A., 75116 Paris (FR)
(72) Inventeur: Durand, Francois, 17300 Rochefort (FR); Guinot, Alain, 17290 Thaire (FR)
(74) Mandataire: Jacobson, Claude

(56) Documents cités:
- EP-A- 0 322 930
- EP-A- 0 658 477
- EP-A- 0 680 843
- EP-A- 0 747 286

## Description

La présente invention concerne les sièges de première et de seconde classe notamment des véhicules de transport de passagers, en général, et porte, plus particulièrement, sur une banquette deux places modulable première-seconde classe, ainsi que sur un procédé de transformation d'une telle banquette.

Une solution actuellement pour changer un siège de première classe en siège de seconde classe et inversement un siège de seconde classe en siège de première classe, notamment d'une salle d'un véhicule de transport de passagers, est de remplacer les sièges.

Le-doument EP-A2-0 322 930 décrit des sièges d'avion pouvant être écartés ou rapprochés pour modifier la classe des sièges.

Un but de l'invention est une banquette deux places modulable première-seconde classe permettant, sans dépose de sièges, de transformer une salle d'une classe donnée en une salle d'une autre classe.

Conformément à l'invention, la banquette deux places modulable première-seconde classe et le procédé de transformation d'une telle banquette sont tels que définis dans les revendications.

Notamment, l'invention consiste en une banquette modulable de première-seconde classe présentant un nombre donné N de places, ladite banquette modulable de première-seconde classe étant susceptible d'être transformée en banquette à N places de seconde-première classe, ladite banquette modulable de première-seconde classe comportant N sièges à N assises et 2N accoudoirs, ladite banquette modulable de première-seconde classe comportant des moyens de translation d'au moins une desdites N assises et d'au moins un desdits 2N accoudoirs, lesdites N assises et lesdits 2N accoudoirs restant alignés les uns par rapport aux autres, des translations T des assises et des accoudoirs obtenues au moyen desdits moyens de translation permettant d'écarter lesdites assises à translater et lesdits accoudoirs à translater les uns des autres, lorsque ladite banquette modulable de seconde classe est transformée en banquette de première classe, ou de resserrer lesdites assises à translater et lesdits accoudoirs à translater les uns contre les autres, lorsque ladite banquette modulable de première classe est transformée en banquette de seconde classe.

L'invention consiste également en un procédé de transformation en première-seconde classe d'une banquette modulable présentant un nombre donné N de places, ladite banquette modulable de première-seconde classe comportant N sièges à N assises et 2N accoudoirs, ledit procédé comportant des étapes permettant :
- de transformer ladite banquette modulable de première-seconde classe en banquette à N places de seconde-première classe, et
- de translater au moins une desdites N assises et au moins un desdits 2N accoudoirs, au moyen de moyens de translation incorporés dans ladite banquette modulable de première-seconde classe, lesdites N assises et lesdits 2N accoudoirs restant alignés les uns par rapport aux autres,

les translations T des assises et des accoudoirs obtenues au moyen desdits moyens de translation permettant d'écarter lesdites assises à translater et lesdits accoudoirs à translater les uns des autres, lorsque ladite banquette modulable de seconde classe est transformée en banquette de première classe, ou de resserrer lesdites assises à translater et lesdits accoudoirs à translater les uns contre les autres, lorsque ladite banquette modulable de première classe est transformée en banquette de seconde classe.

Un avantage de la banquette deux places modulable première-seconde classe et du procédé de transformation d'une telle banquette de l'invention est que la durée de transformation d'une salle d'une classe donnée en une salle d'une autre classe est très courte et permet de modifier ponctuellement la capacité du train.

Un autre avantage de la banquette deux places modulable première-seconde classe et du procédé de transformation d'une telle banquette de l'invention est de permettre à l'exploitant de pallier aux problèmes de variations de charge entre week-end et semaine par exemple.

Un autre avantage de la banquette deux places modulable première-seconde classe et du procédé de transformation d'une telle banquette de l'invention est d'optimiser le nombre de places proposé sur des trains non évolutifs en terme de nombre de remorques.

D'autres buts, caractéristiques et avantages de l'invention apparaîtront à la lecture de la description du mode de réalisation préféré d'une banquette deux places modulable première-seconde classe et de la description du procédé de transformation d'une telle banquette, description faite en liaison avec les dessins dans lesquels :
- la figure 1A est une vue générale d'une banquette deux places modulable première-seconde classe conforme à l'invention, la banquette étant modulée pour constituer une banquette deux places de seconde classe,
- la figure 2A est une vue générale d'une banquette deux places modulable première-seconde classe conforme à l'invention, la banquette étant modulée pour constituer une banquette deux places de première classe,

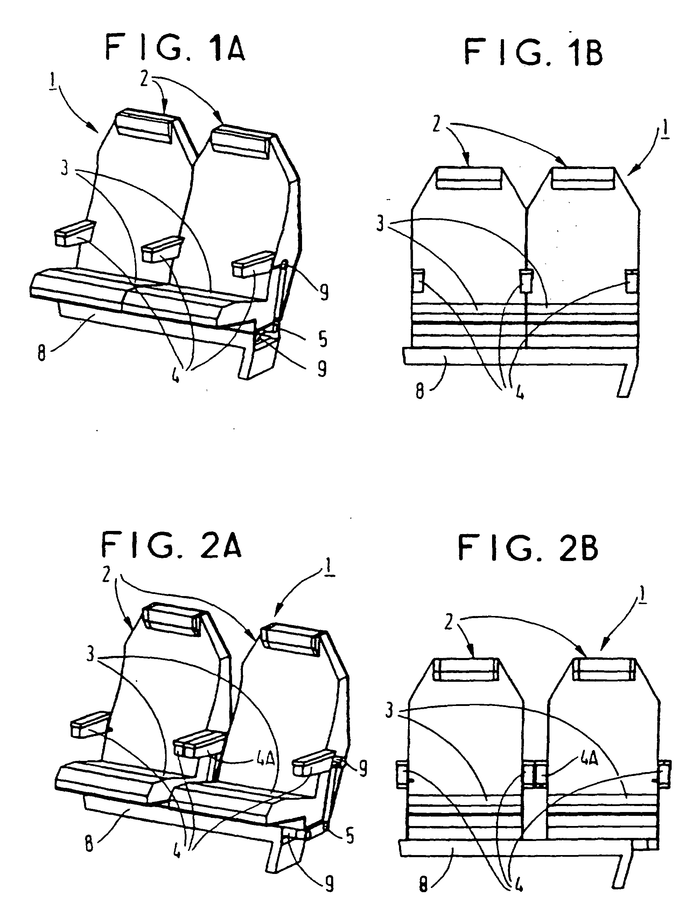

- la figure 1B est une vue de face de la banquette deux places modulable première-seconde classe conforme à l'invention représentée à la figure 1A dans laquelle la banquette est modulée pour constituer une banquette deux places de seconde classe,
- la figure 2B est une vue générale de la banquette deux places modulable première-seconde classe conforme à l'invention représentée à la figure 2A dans laquelle la banquette est modulée pour constituer une banquette deux places de première classe,
- la figure 1C est une vue générale du châssis de la banquette deux places modulable première-seconde classe conforme à l'invention représentée à la figure 1A dans laquelle la banquette est modulée pour constituer une banquette deux places de seconde classe,

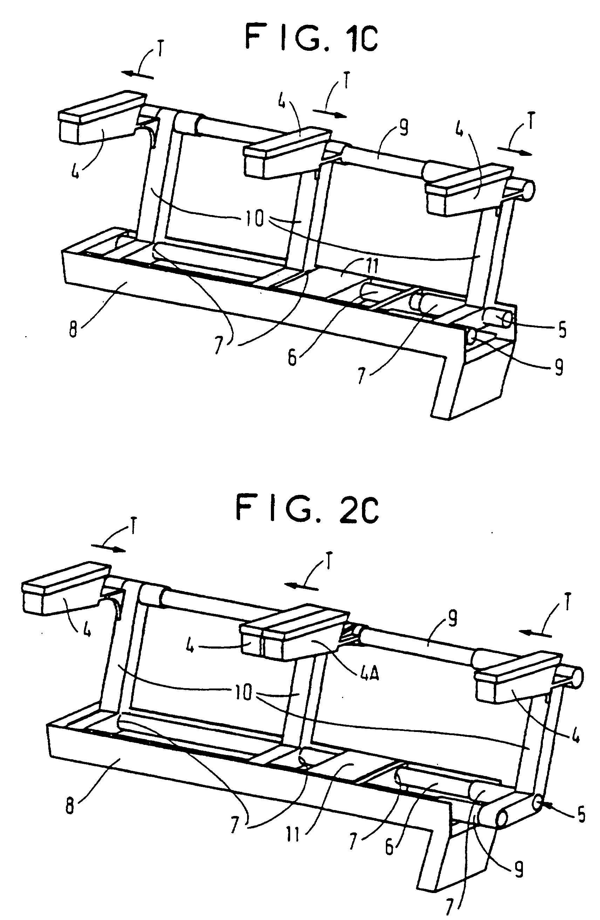

- la figure 2C est une vue générale du châssis de la banquette deux places modulable première-seconde classe conforme à l'invention représentée à la figure 2A dans laquelle la banquette est modulée pour constituer une banquette deux places de première classe,
- la figure 1D représente une vue de dessus de la banquette deux places modulable première-seconde classe conforme à l'invention représentée à la figure 1A dans laquelle la 'banquette est modulée pour constituer une banquette deux places de seconde classe,

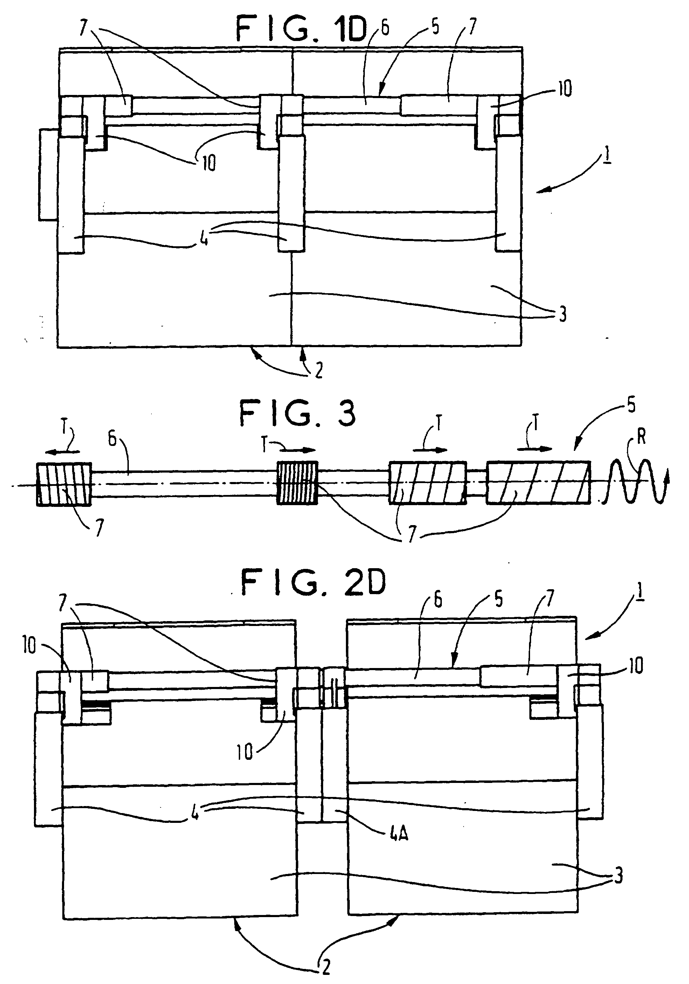

- la figure 2D représente une vue de dessus de la banquette deux places modulable première-seconde classe conforme à l'invention représentée à la figure 2A dans laquelle la banquette est modulée pour constituer une banquette deux places de première classe,
- la figure 3 représente les moyens de translation des accoudoirs et des assises de la banquette deux places modulable première-seconde classe conforme à l'invention,

La présente invention consiste à conserver les sièges constituant la banquette modulable première-seconde classe présentant un nombre donné de places et à modifier la position de certains de ces sièges de manière à faire évoluer en largeur la banquette.

A titre d'exemple, une banquette à deux places de seconde classe se transforme en banquette à deux places de première classe en écartant les assises et les accoudoirs de la banquette de seconde classe.

De manière générale, une banquette à N places (N nombre entier) de seconde classe se transforme en banquette à N places de première classe en écartant les assises et les accoudoirs de la banquette de seconde classe.

La banquette modulable 1 de première-seconde classe présentant un nombre donné N de places lorsqu'elle est modulée en banquette de première classe est susceptible d'être transformée en banquette également à N places de seconde classe et inversement.

La banquette modulable 1 de première-seconde classe, lorsqu'elle est modulée en banquette de seconde classe, comporte N sièges 2 à N assises 3 et N+1 accoudoirs 4 utilisables.

La banquette modulable 1 de première-seconde classe comporte des moyens de translation 5 d'au moins une des N assises 3 et d'au moins un des N+1 accoudoirs 4.

Les N assises 3 et les N+1 accoudoirs 4 restent alignés les uns par rapport aux autres après transformation.

Des translations T des assises et des accoudoirs sont obtenues au moyen des moyens de translation 5 de manière à écarter les assises à translater et les accoudoirs à translater les uns des autres, lorsque la banquette modulable de seconde classe est transformée en banquette de première classe, ou de resserrer les assises à translater et les accoudoirs à translater les uns contre les autres, lorsque la banquette modulable 1 de première classe est transformée en banquette de seconde classe.

La banquette est, par exemple, telle que, lors de la transformation, au moins une assise 3 ou au moins une assise 3 et au moins un accoudoir 4 sont fixes, par exemple l'assise de l'une des extrémités ou l'assise de l'une des extrémités et l'ensemble des accoudoirs.

Les moyens de translation 5 des assises 3 à translater et des accoudoirs 4 à translater se composent d'un arbre de translation 6 susceptible d'être mû en rotation R et comportant un élément de translation 7 associé à chaque accoudoir 3 à translater et à chaque assise 4 à translater.

Conformément au mode de réalisation préféré, les éléments de translation 7 des accoudoirs 3 et des assises 4 à translater se composent de vis à pas variable dont le pas de vis et la longueur de la zone active comportant le pas de vis augmentent avec l'éloignement des accoudoirs 3 à translater et des assises 4 à translater par rapport aux accoudoirs 3 et aux assises 4 fixes.

Les pas de vis des éléments de translation 7 sont soit à gauche sur certains de ces éléments de translation 7, soit à droite pour les autres éléments de translation 7 et sont fonction de la transformation T à effectuer.

La banquette selon l'invention comprend un châssis 8 supportant l'arbre de translation 6 et au moins un arbre de guidage 9 des accoudoirs 3 à translater et des assises 4 à translater.

L'arbre de translation 6 et les arbres de guidage 9 supportent des supports d'accoudoirs 10 mobiles en translation et des supports d'assises 11 mobiles en translation.

Les supports mobiles d'accoudoirs 10 à translater sont translatés au moyen des éléments de translation 7 associés à chaque accoudoir à translater.

De même, les supports mobiles d'assises 11 à translater sont translatés au moyen des éléments de translation 7 associés à chaque assise à translater.

Un accoudoir supplémentaire 4A est avantageusement introduit entre chaque siège 2 lorsque la banquette modulable de seconde classe est transformée en banquette de première classe.

Les accoudoirs et les assises étant, par exemple, montés sur coulisseaux de manière à permettre leur translation et déplacement relatif, ce mouvement peut être soit motorisé, soit manuel.

Différents systèmes peuvent être utilisés pour translater les accoudoirs et les assises à translater ; il est par exemple possible d'utiliser des vis à pas variable, des tringles (non représentées) ou un jeu de cames (non représentées).

A titre d'exemple, les différentes translations sont obtenues par translation manuelle des accoudoirs et des assises à translater au moyen de guide sans filetage.

Des butées fixent les positions extrêmes des différents éléments, le verrouillage de l'ensemble, assuré par exemple par un système à gâche ou à cliquet, permettant d'éviter tout mouvement après manoeuvre.

La présente invention porte également sur un procédé de transformation en première-seconde classe d'une banquette modulable 1 présentant un nombre donné N de places, la banquette modulable de première-seconde classe comportant N sièges 2 à N assises et 2N accoudoirs 4, tous utilisables lorsqu'elle est modulée en banquette de première classe.

Le procédé selon l'invention comporte des étapes permettant :
- de transformer la banquette modulable 1 de première-seconde classe en banquette à N places de seconde-première classe, et
- de translater au moins une des N assises 3 et au moins un des 2N accoudoirs 4, au moyen de moyens de translation 5 incorporés dans la banquette modulable 1 de première-seconde classe, les N assises 3 et les 2N accoudoirs 4 restant alignés les uns par rapport aux autres.

Les translations 7 des assises et des accoudoirs obtenues au moyen des moyens de translation 5 permettent d'écarter les assises à translater et les accoudoirs à translater les uns des autres, lorsque la banquette modulable de seconde classe est transformée en banquette de première classe, ou de resserrer les assises à translater et les accoudoirs à translater les uns contre les autres, lorsque la banquette modulable 1 de première classe est transformée en banquette de seconde classe.

Le procédé de transformation d'une banquette comporte une étape consistant à mouvoir en rotation R l'arbre de translation 6 incorporé dans les moyens de translation 5 des assises 3 à translater et des accoudoirs 4 à translater, au moyen d'éléments de translation 7 associés à chaque accoudoir 3 à translater et à chaque assise 4 à translater.

Le procédé de transformation de la banquette comporte une étape consistant à translater des supports mobiles d'accoudoirs 10 à translater, au moyen des éléments de translation 7 associés à chaque accoudoir à translater, et à translater des supports mobiles d'assises 11 à translater, au moyen desdits éléments de translation 7 associés à chaque assise à translater.

Le procédé de transformation de la banquette comporte une étape consistant à introduire un accoudoir supplémentaire 4A entre les sièges 2 lorsque la banquette modulable de seconde classe est transformée en banquette de première classe.

Le procédé de transformation de la banquette comporte une étape consistant à supprimer un accoudoir supplémentaire 4A entre les sièges 2 lorsque la banquette modulable de première classe est transformée en banquette de seconde classe.

## Revendications

1. Banquette modulable (1) de première-seconde classe présentant un nombre donné N de places, ladite banquette modulable (1) de première-seconde classe étant susceptible d'être transformée en banquette à N places de seconde-première classe, ladite banquette modulable de première-seconde classe comportant N sièges (2) à N assises (3) et des accoudoirs (4), ladite banquette modulable (1) de première-seconde classe comportant des moyens de translation (5) d'au moins une desdites N assises (3) et d'au moins un desdits accoudoirs (4), lesdites N assises (3) et lesdits accoudoirs (4) restant alignés les uns par rapport aux autres, des translations T des assises et des accoudoirs obtenues au moyen desdits moyens de translation (5) permettant d'écarter lesdites assises à translater et lesdits accoudoirs à translater les uns des autres, lorsque ladite banquette modulable de seconde classe est transformée en banquette de première classe, ou de resserrer lesdites assises à translater et lesdits accoudoirs à translater les uns contre les autres, lorsque ladite banquette modulable (1) de première classe est transformée en banquette de seconde classe,
**caracterisé en ce qu'**elle comprend 2N accoudoirs.

2. Banquette selon la revendication 1, dans laquelle au moins une assise (3) ou au moins une assise (3) et au moins un accoudoir (4) sont fixes.

3. Banquette selon l'une quelconque des revendications 1 ou 2, dans laquelle lesdits moyens de translation (5) desdites assises (3) à translater et desdits accoudoirs (4) à translater se composent d'un arbre de translation (6) susceptible d'être mû en rotation R et comportant un élément de translation (7) associé à chaque accoudoir (3) à translater et à chaque assise (4) à translater.

4. Banquette selon l'une quelconque des revendications 1 à 3, dans laquelle lesdits éléments de translation (7) desdits accoudoirs (3) et desdites assises (4) à translater se composent de vis à pas variable dont le pas de vis et la longueur de la zone' active comportant ledit pas de vis augmentent avec l'éloignement desdits accoudoirs (3) à translater et desdites assises (4) à translater par rapport auxdits accoudoirs (3) et auxdites assises (4) fixes.

5. Banquette selon l'une quelconque des revendications 1 à 4, comprenant un châssis (8) supportant ledit arbre de translation (6) et au moins un arbre de guidage (9) desdits accoudoirs (3) à translater et desdites assises (4) à translater, ledit arbre de translation (6) et lesdits arbres de guidage (9) supportant des supports d'accoudoirs (10) mobiles en translation et des supports d'assises (11) mobiles en translation, lesdits support mobiles d'accoudoirs (10) à translater étant translatés au moyen desdits éléments de translation (7) associés à chaque accoudoir à translater et lesdits supports mobiles d'assises (11) à translater étant translatés au moyen desdits éléments de translation (7) associés à chaque assise à translater.

6. Banquette selon l'une quelconque des revendications 1 à 5, dans laquelle les pas de vis desdits éléments de translation (7) sont soit à gauche sur certains de ces éléments de translation (7), soit à droite pour les autres éléments de translation (7) et sont fonction de la translation T à effectuer.

7. Banquette selon l'une quelconque des revendications 1 à 6, dans laquelle un accoudoir supplémentaire (4A) est introduit entre les sièges (2) lorsque ladite banquette modulable de seconde classe est transformée en banquette de première classe.

8. Banquette selon l'une quelconque des revendications 1 à 6, dans laquelle un accoudoir supplémentaire (4A) est supprimé entre les sièges (2) lorsque ladite banquette modulable de première classe est transformée en banquette de seconde classe.

9. Procédé de transformation en première-seconde classe d'une banquette modulable (1) présentant un nombre donné N de places, ladite banquette modulable de première-seconde classe comportant N sièges (2) à N assises (3) et des accoudoirs (4), ledit procédé comportant des étapes permettant :
- de transformer ladite banquette modulable (1) de première-seconde classe en banquette à N places de seconde-première classe, et
- de translater au moins une desdites N assises (3) et au moins un desdits accoudoirs (4), au moyen de moyens de translation (5) incorporés dans ladite banquette modulable (1) de première-seconde classe, lesdites N assises (3) et lesdits accoudoirs (4) restant alignés les uns par rapport aux autres,
les translations T des assises et des accoudoirs obtenues au moyen desdits moyens de translation (5) permettant d'écarter lesdites assises à translater et lesdits accoudoirs à translater les uns des autres, lorsque ladite banquette modulable de seconde classe est transformée en banquette de première classe, ou de resserrer lesdites assises à translater et lesdits accoudoirs à translater les uns contre les autres, lorsque ladite banquette modulable (1) de première classe est transformée en banquette de seconde classe,
**caracterisé en ce que** la banquette comprend 2N accoudoirs.

10. Procédé selon la revendication 9, comportant une étape consistant à mouvoir en rotation R un arbre de translation (6) incorporé dans lesdits moyens de translation (5) desdites assises (3) à translater et desdits accoudoirs (4) à translater, au moyen d'éléments de translation (7) associés à chaque accoudoir (3) à translater et à chaque assise (4) à translater.

11. Procédé selon l'une quelconque des revendications 9 ou 10, comportant une étape consistant à translater des supports mobiles d'accoudoirs (10) à translater, au moyen desdits éléments de translation (7) associés à chaque accoudoir à translater, et à translater des supports mobibles d'assises (11) à translater, au moyen desdits éléments de translation (7) associés à chaque assise à translater.

12. Procédé selon l'une quelconque des revendications 9 à 11, comportant une étape consistant à introduire un accoudoir supplémentaire (4A) entre chaque siège (2) lorsque ladite banquette modulable de seconde classe est transformée en banquette de première classe.

13. Procédé selon l'une quelconque des revendications 9 à 11, comportant une étape consistant à supprimer un accoudoir supplémentaire (4A) entre chaque siège (2) lorsque ladite banquette modulable de première classe est transformée en banquette de seconde classe.

## Patentansprüche

1. Veränderbare Sitzbank (1) der ersten/zweiten Klasse, die eine gegebene Anzahl N von Plätzen aufweist, wobei die veränderbare Sitzbank (1) der ersten/zweiten Klasse in eine Sitzbank mit N Plätzen der zweiten/ersten Klasse umgewandelt werden kann, wobei die veränderbare Sitzbank der ersten/zweiten Klasse N Sitze (2) mit N Sitzflächen (3) und mit Armlehnen (4) umfasst, wobei die veränderbare Sitzbank (1) der ersten/zweiten Klasse Mittel (5) zur translatorischen Bewegung wenigstens einer der N Sitzflächen (3) und wenigstens einer der Armlehnen (4) umfasst, wobei die N Sitzflächen (3) und die Armlehnen (4) relativ zueinander ausgerichtet bleiben, wobei die translatorischen Bewegungen (T) der Sitzflächen und der Armlehnen, die durch die Mittel (5) zur translatorischen Bewegung erhalten werden, ermöglichen, die translatorisch zu bewegenden Sitzflächen und die translatorisch zu bewegenden Armlehnen voneinander zu entfernen, wenn die veränderbare Sitzbank der zweiten Klasse in eine Sitzbank der ersten Klasse umgewandelt wird, oder die translatorisch zu bewegenden Sitzflächen und die translatorisch zu bewegenden Armlehnen einander anzunähern, wenn die veränderbare Sitzbank (1) der ersten Klasse in eine Sitzbank der zweiten Klasse umgewandelt wird, **dadurch gekennzeichnet, dass** sie 2N Armlehnen umfasst.

2. Sitzbank nach Anspruch 1, bei der wenigstens eine Sitzfläche (3) fest ist oder wenigstens eine Sitzfläche (3) und wenigstens eine Armlehne (4) fest sind.

3. Sitzbank nach einem der Ansprüche 1 oder 2, bei der die Mittel (5) zur translatorischen Bewegung der translatorisch zu bewegenden Sitzflächen (3) und der translatorisch zu bewegenden Armlehnen (4) aus einer Translationswelle (6) gebildet sind, die drehbar R ist und ein Translationselement (7) aufweist, das jeder translatorisch zu bewegenden Armlehne (3) und jeder translatorisch zu bewegenden Sitzfläche (4) zugeordnet ist.

4. Sitzbank nach einem der Ansprüche 1 bis 3, bei der die Translationselemente (7) der translatorisch zu bewegenden Armlehnen (3) und Sitzflächen (4) aus einer Schraube mit veränderlicher Steigung gebildet sind, wobei die Steigung und die Länge der diese Steigung enthaltenden aktiven Zone mit zunehmendem Abstand von den translatorisch zu bewegenden Armlehnen (3) und translatorisch zu bewegenden Sitzflächen (4) in Bezug auf die festen Armlehnen (3) und Sitzflächen (4) zunehmen.

5. Sitzbank nach einem der Ansprüche 1 bis 4, die einen die Translationswelle (6) und wenigstens eine Führungswelle (9) der translatorisch zu bewegenden Armlehnen (3) und der translatorisch zu bewegenden Sitzflächen (4) unterstützenden Rahmen (8) umfasst, wobei die Translationswelle (6) und die Führungswellen (9) translatorisch bewegliche Armlehnenträger (10) und translatorisch bewegliche Sitzflächenträger (11) unterstützen, wobei die beweglichen Träger (10) der translatorisch zu bewegenden Armlehnen mittels der jeder translatorisch zu bewegenden Armlehne zugeordneten Translationselemente (7) translatorisch bewegt werden und die beweglichen Träger (11) der translatorisch zu bewegenden Sitzflächen mittels der jeder translatorisch zu bewegenden Sitzfläche zugeordneten Translationselemente (7) translatorisch bewegt werden.

6. Sitzbank nach einem der Ansprüche 1 bis 5, bei der die Steigungen der Translationselemente (7) an Bestimmten dieser Translationselemente (7) linksgerichtet und an den anderen Translationselementen (7) rechtsgerichtet sind und von der auszuführenden translatorischen Bewegung T abhängen.

7. Sitzbank nach einem der Ansprüche 1 bis 6, bei der eine zusätzliche Armlehne (4A) zwischen die Sitze (2) eingeführt wird, wenn die veränderbare Sitzbank der zweiten Klasse in eine Sitzbank der ersten Klasse umgewandelt wird.

8. Sitzbank nach einem der Ansprüche 1 bis 6, bei der die zusätzliche Armlehne (4A) zwischen den Sitzen (2) entfernt wird, wenn die veränderbare Sitzbank der ersten Klasse in eine Sitzbank der zweiten Klasse umgewandelt wird.

9. Verfahren zum Umwandeln einer veränderbaren Sitzbank (1) zwischen erster Klasse und zweiter Klasse, wobei die Sitzbank eine gegebene Anzahl N von Plätzen aufweist, wobei die veränderbare Sitzbank der ersten/zweiten Reihe N Sitze (2) mit N Sitzflächen (3) und mit Armlehnen (4) aufweist, wobei das Verfahren die Schritte umfasst, die ermöglichen:
- die veränderbare Sitzbank (1) der ersten/zweiten Klasse in eine Sitzbank mit N Plätzen der zweiten/ersten Klasse umzuwandeln und
- wenigstens die N Sitzflächen (3) und wenigstens eine der Armlehnen (4) durch Mittel (5) zur translatorischen Bewegung, die in die veränderbare Sitzbank (1) der ersten/zweiten Klasse eingebaut sind, translatorisch zu bewegen, wobei die N Sitzflächen (3) und die Armlehnen (4) relativ zueinander ausgerichtet bleiben,
wobei die translatorischen Bewegungen T der Sitzflächen und der Armlehnen, die durch die Mittel (5) zur translatorischen Bewegung erhalten werden, ermöglichen, die translatorisch zu bewegenden Sitzflächen und die translatorisch zu bewegenden Armlehnen voneinander zu entfernen, wenn die veränderbare Sitzbank der zweiten Klasse in eine Sitzbank der ersten Klasse umgewandelt wird, oder die translatorisch zu bewegenden Sitzflächen und die translatorisch zu bewegenden Armlehnen einander anzunähern, wenn die veränderbare Sitzbank (1) der ersten Klasse in eine Sitzbank der zweiten Klasse umgewandelt wird,
**dadurch gekennzeichnet, dass** die Sitzbank 2N Armlehnen umfasst.

10. Verfahren nach Anspruch 9, das einen Schritt umfasst, der darin besteht, eine Translationswelle (6), die in die Mittel (5) zur translatorischen Bewegung der translatorisch zu bewegenden Sitzflächen (3) eingebaut ist, mittels Translationselementen (7), die jeder translatorisch zu bewegenden Armlehne (3) und jeder translatorisch zu bewegenden Sitzfläche (4) zugeordnet sind, zu drehen R.

11. Verfahren nach einem der Ansprüche 9 oder 10, das einen Schritt umfasst, der darin besteht, bewegliche Träger von translatorisch zu bewegenden Armlehnen (10) durch die Translationselemente (7), die jeder translatorisch zu bewegenden Armlehne zugeordnet sind, translatorisch zu bewegen und bewegliche Träger von translatorisch zu bewegenden Sitzflächen (11) durch die Translationselemente (7), die jeder translatorisch zu bewegenden Sitzfläche zugeordnet sind, translatorisch zu bewegen.

12. Verfahren nach einem der Ansprüche 9 bis 11, das einen Schritt umfasst, der darin besteht, zwischen jeden Sitz (2) eine zusätzliche Armlehne (4A) einzubringen, wenn die veränderbare Sitzbank der zweiten Klasse in eine Sitzbank der ersten Klasse umgewandelt wird.

13. Verfahren nach einem der Ansprüche 9 bis 11, das einen Schritt umfasst, der darin besteht, eine zusätzliche Armlehne (4A) zwischen jedem Sitz (2) zu entfernen, wenn die veränderbare Sitzbank der ersten Klasse in eine Sitzbank der zweiten Klasse umgewandelt wird.

## Claims

1. Seating unit (1) which can be modulated from first to second class, with a given number N of places, the said seating unit (1) which can be modulated from first to second class being able to be transformed into a seating unit with N second to first class places, the said seating unit which can be modulated from first to second class comprising N seats (2) with N sitting places (3) and arm rests (4), the said seating unit (1) which can be modulated from first to second class comprising means for translation (5) of at least one of the said N sitting places (3) and at least one of the said arm rests (4), the said N sitting places (3) and the said arm rests (4) remaining aligned relative to one another, translations T of the sitting places and of the arm rests obtained by means of the said means for translation (5) making it possible to space the said sitting places to be translated and the said arm rests to be translated from one another, when the said seating unit which can be modulated from second class is transformed into a first class seating unit, or to draw the said sitting places to be translated and the said arm rests to be translated against one another when the said seating unit (1) which can be modulated from first class is transformed into a second class seating unit, **characterised in that** it comprises 2N arm rests.

2. Seating unit according to claim 1, wherein at least one sitting place (3) or at least one sitting place (3) and at least one arm rest (4) are fixed.

3. Seating unit according to claim 1 or claim 2, wherein the said means for translation (5) of the said sitting places (3) to be translated and of the said arm rests (4) to be translated consist of a translation shaft (6) which can be rotated R and comprising a translation element (7) which is associated with each arm rest (3) to be translated and each sitting place (4) to be translated.

4. Seating unit according to any one of claims 1 to 3, wherein the said elements (7) for translation of the said arm rests (3) and of the said sitting places (4) to be translated consist of variable-pitch screws, of which the screw pitch and length of the active area comprising the said screw pitch increase with the spacing of the said arm rests (3) to be translated and of the said sitting places (4) to be translated, relative to the said fixed arm rests (3) and seats (4).

5. Seating unit according to any one of claims 1 to 4, comprising a frame (8) which supports the said translation shaft (6) and at least one shaft (9) for guiding of the said arm rests (3) to be translated and of the said sitting places (4) to be translated, the said translation shaft (6) and the said guiding shafts (9) supporting arm-rest supports (10) which are mobile in translation and sitting-place supports (11) which are mobile in translation, the said mobile supports (10) of arm rests to be translated being translated by means of the said translation elements (7) which are associated with each arm rest to be translated, and the said mobile supports of sitting places (11) to be translated being translated by means of the said translation elements (7) which are associated with each sitting place to be translated.

6. Seating unit according to any one of claims 1 to 5, wherein the screw pitches of the said translation elements (7) are either on the left on certain of these translation elements (7), or on the right for the other translation elements (7), and depend on the translation T to be carried out.

7. Seating unit according to any one of claims 1 to 6, wherein an additional arm rest (4A) is introduced between the seats (2) when the said seating unit which can be modulated from second class is transformed into a first class seating unit.

8. Seating unit according to any one of claims 1 to 6, wherein an additional arm rest (4A) is eliminated from between the seats (2) when the said seating unit which can be modulated from first class is transformed into a second class seating unit.

9. Method for transformation from first to second class of a seating unit (1) which can be modulated and has a given number N of places, the said seating unit which can be modulated from first to second class comprising N seats (2) with N sitting places (3) and arm rests (4), the said method comprising steps which make it possible to:
- transform the said seating unit (1) which can be modulated from first to second class into a seating unit with N second to first class places; and
- translate at least one of the said N sitting places (3) and at least one of the said arm rests (4) by means of means for translation (5) which are incorporated in the said seating unit (1) which can be modulated from first to second class, the said N sitting places (3) and the said arm rests (4) remaining aligned relative to one another, the translations T of the sitting places and of the arm rests obtained by means of the said means for translation (5) making it possible to space the said sitting places to be translated and the said arm rests to be translated from one another, when the said seating unit which can be modulated from second class is transformed into a first class seating unit, or to draw the said sitting places to be translated and the said arm rests to be translated against one another when the said seating unit (1) which can be modulated from first class is transformed into a second class seating unit, **characterised in that** the seating unit comprises 2N arm rests.

10. Method according to claim 9, comprising a step which consists of rotating R a translation shaft (6) which is incorporated in the said means for translation (5) of the said sitting places (3) to be translated and of the said arm rests (4) to be translated, by means of translation elements (7) which are associated with each arm rest (3) to be translated and each sitting place (4) to be translated.

11. Method according to claim 9 or claim 10, comprising a step which consists of translating mobile supports of arm rests (10) to be translated, by means of the said translation elements (7) which are associated with each arm rest to be translated, and of translating mobile supports of sitting places (11) to be translated, by means of the said translation elements (7) which are associated with each sitting place to be translated.

12. Method according to any one of claims 9 to 11, comprising a step which consists of introducing an additional arm rest (4A) between each seat (2) when the said second class seating unit which can be modulated is transformed into a first class seating unit.

13. Method according to any one of claims 9 to 11, comprising a step which consists of eliminating an additional arm rest (4A) from between each seat (2) when the said first class seating unit which can be modulated is transformed into a second class seating unit.
